Europäisches Patentamt

European Patent Office

Office européen des brevets

(19)

(11) EP 0 939 495 B1

(12) EUROPEAN PATENT SPECIFICATION

(45) Date of publication and mention
of the grant of the patent:
**14.04.2004 Bulletin 2004/16**

(51) Int Cl.⁷: **H04B 1/00**, H04B 1/16, H04M 1/72

(21) Application number: **98400460.6**

(22) Date of filing: **26.02.1998**

(54) **Power saving system for an electronic portable device**

Energiesparanordnung für ein elektronisches tragbares Gerät

Economie d'énergie pour un dispositif électronique portable

(84) Designated Contracting States:
**DE FR GB IT**

(43) Date of publication of application:
**01.09.1999 Bulletin 1999/35**

(73) Proprietor: **MOTOROLA SEMICONDUCTEURS
S.A.
31023 Toulouse Cédex (FR)**

(72) Inventors:
• **Abdesselem, Ouelid
31000 Toulouse (FR)**
• **Khlat, Nadim
31270 Cugneaux (FR)**

(74) Representative: **Litchfield, Laura Marie et al
Motorola European Intellectual Property
Operations,
Midpoint - Alencon Link
Basingstoke, Hampshire RG21 7PL (GB)**

(56) References cited:
**EP-A- 0 726 508          WO-A-90/11652
GB-A- 2 240 010**

## Description

Field of the Invention

This invention relates to portable electronic devices, such as portable radio communication devices.

Background of the Invention

When designing new portable electronic devices, a key goal is to reduce power consumption of the device. In portable radio communication devices, the battery life of the device can be increased and hence talk-time or standby-time increased, by reducing power consumption. Many ideas directed to achieving this goal have been developed.

In GSM portable cellular radio communication devices, the stand-by time of a device is its main characteristic and thus, any improvements in the stand-by time provides a key advantage to a device manufacturer. The stand-by time depends primarily on the Discontinuous Reception (DRX) mode, during which mode the device only operates at specific cycles to listen to any paging signals from the base station which will indicate if a communication link is required between the base station and the portable device. During the DRX mode, which can be in the range of 500ms to 2000ms, the device should consume as low power as possible from the battery in order to increase the stand-by time.

It is known to use two clocks, a 'fast' clock and a 'slow' clock, to reduce power consumption. When the device is active, i.e. during full operation of the device, for example, when the device is receiving or transmitting a signal, a 'fast' clock, such as a 13 MHz clock, is used. When the device is inactive and so is not receiving or transmitting a signal, for example during the DRX period in stand-by, a 'slow' clock, such as a 32 KHz clock, is used. By using the 'slow' clock during the inactive mode rather than the 'fast clock', power consumption can be reduced. A device of this kind is described in European Patent Specification EP0726508, for example.

In the inactive mode, parts of the device, such as the RF front-end Integrated Circuits (ICs) are not used. Although the Central Processing Unit 35 (CPU) of the baseband Integrated Circuit (IC) is not used during the inactive DRX mode, there are certain functions performed by the baseband IC, such as the 32 KHz counter for determining when the device has to be activated for the active mode, the interfaces for the keypad, SRAM memory, display, and SIM monitor, which must be operational during the inactive DRX period and which therefore require a voltage supply to be supplied to the baseband IC. All the interfaces on the baseband IC and other ICs that are connected to these elements which must be 'on' during the inactive mode must also be powered on to avoid short circuits. Thus, most of the voltage regulators remain 'on' during the inactive mode and since these regulators are major contributors to power consumption, there is still significant power consumption during the inactive mode with a 'slow' clock.

There is a need to provide an improved electronic device which has reduced power consumption compared to the known devices.

Summary of the Invention

In accordance with the present invention there is provided a portable electronic device as recited in claim 1 of the accompanying claims.

Brief Description of the Drawings

A portable electronic device in accordance with the present invention will now be described, by way of example only, with reference to the accompanying drawings in which:

FIG. 1 is a block schematic diagram of part of a typical cellular radio communications device;
FIG. 2 is a block schematic diagram of part of a portable electronic device in accordance with the present invention;
FIG. 3 is a flow chart representing a calibration process for calibrating the slow clock to the fast clock used in the device of FIG. 2;
FIG. 4 is a graphical representation of the received active burst signal in DRX mode; and
FIG. 5 is a flow chart showing the operation of some of the elements of the device of FIG. 2 when it switches between an active mode and an inactive mode.

Detailed Description of the Drawings

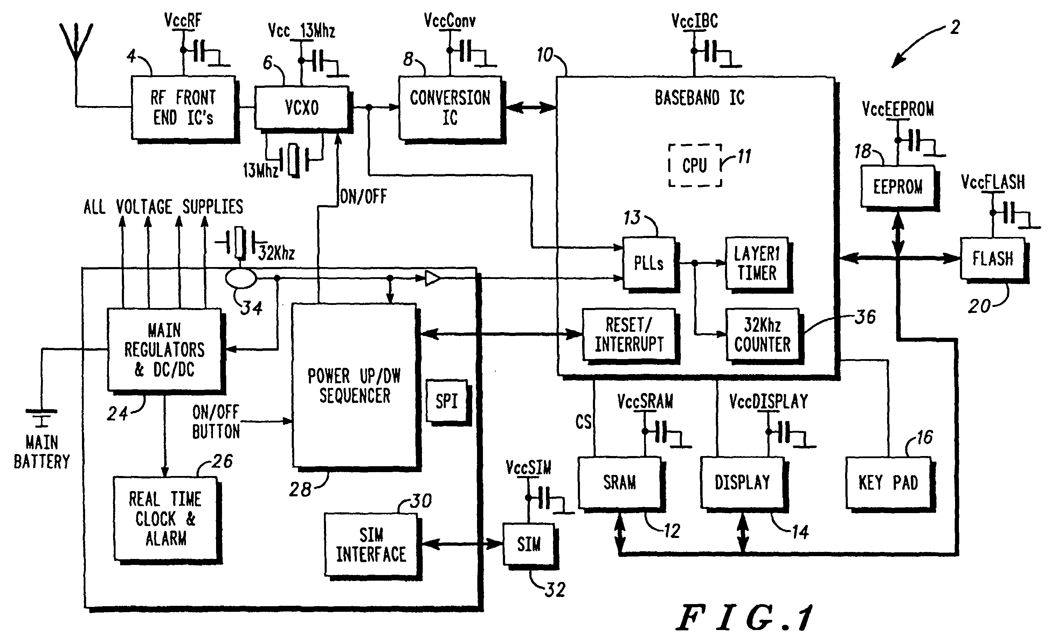

FIG. 1 shows part 2 of a known cellular radio communications device comprising RF front-end ICs 4 having a voltage supply VccRF, a VCO IC 6 having a voltage supply Vcc13MHz, a conversion IC 8 having a voltage supply VccConv, a baseband IC 10 having a voltage supply VccIBC and a CPU 11 and the baseband IC's peripherals 12-20, each of which have its own voltage supply. The peripherals include a Static Random Access Memory (SRAM) 12 which stores data used by the baseband IC during the active and inactive modes, a display driver 14, a keypad 16, Electronically Erasable and Programmable Read-Only Memory (EEPROM) 18, and FLASH memory 20.

A 13 MHz crystal oscillator provides a reference signal to the VCO IC 6 and conversion IC 8. The output of the VCO IC 6 is coupled to PLL 13 of the baseband IC 10.

A power management IC 22 comprises voltage regulators and DC/DC converters (block 24) which provide the voltage supplies to the different ICs. Block 24 is coupled to the main battery. The power management IC 22 also comprises a real-time clock 26 that provides information to the user of the day, hour, minute, second, a SIM interface 30 for coupling to a SIM monitor 32 which monitors the insertion/removal of a SIM card (not shown) and a power UP/DW sequencer 28. The power UP/DW sequencer 28 initiates the power on or power off of all or a selection of ICs in response to a reset or interrupt signal from the baseband IC 10 or to actuation of an on/off button.

The power management IC 22 further comprises a 32 KHz crystal oscillator 34 which has an output coupled to PLL 13 of the baseband IC 10.

During the active mode, i.e. when the cellular radio communications device is fully operational, all the IC's and peripherals are 'on' and are powered by their respective voltage supplies generated by the block 24. The VCO IC 6 thus provides a 13 Mhz signal to PLL 13 of the baseband IC 10 which uses this signal to generate a 'fast' clock signal for clocking the device.

When the device enters the inactive mode, e. g. when the cellular radio communications device enters the stand-by mode, the RF front-end ICs 4, the conversion IC 8, CPU 11, EEPROM 8 and FLASH memory 20 are powered off by the power UP/DW sequencer 28 in response to a signal from the baseband IC 10. Other ICs and peripherals which are required during the inactive mode remain 'on' and are powered by their respective voltage supplies generated by the block 24. Since the functions to be performed by the device during the inactive mode do not need a 'fast' clock, the VCO IC 6 is also powered off and the 32 KHz signal generated by the oscillator 34 is used by the PLL 13 to generate a 'slow' clock signal for clocking the device.

A 32 KHz counter 36 in the baseband IC 10 counts the clock pulses of the 32 KHz 'slow' clock. When the count reaches a first predetermined count, which will depend on the length of the DRX period, an interrupt is generated. In response to the interrupt, the power UP/DW sequencer 28 powers up all or some of the IC's, CPU 11 and peripherals and after a second predetermined count, generates a second interrupt in response to which the CPU 11 takes control and the 'fast' clock is again used for clocking the device. The CPU 11 knows where to re-start in its program since its state at power-down was stored in the SRAM 12.

Although the high power consuming devices such as the VCO IC 6, are powered off during the inactive mode and a 'slow' clock is used to drive the elements of the device which are powered 'on', the block 24 is still required to provide voltage supplies to those IC's, peripherals and parts of the baseband IC which are still operational during the inactive mode. Since the main regulators are required during the inactive mode, there is still significant power consumption.

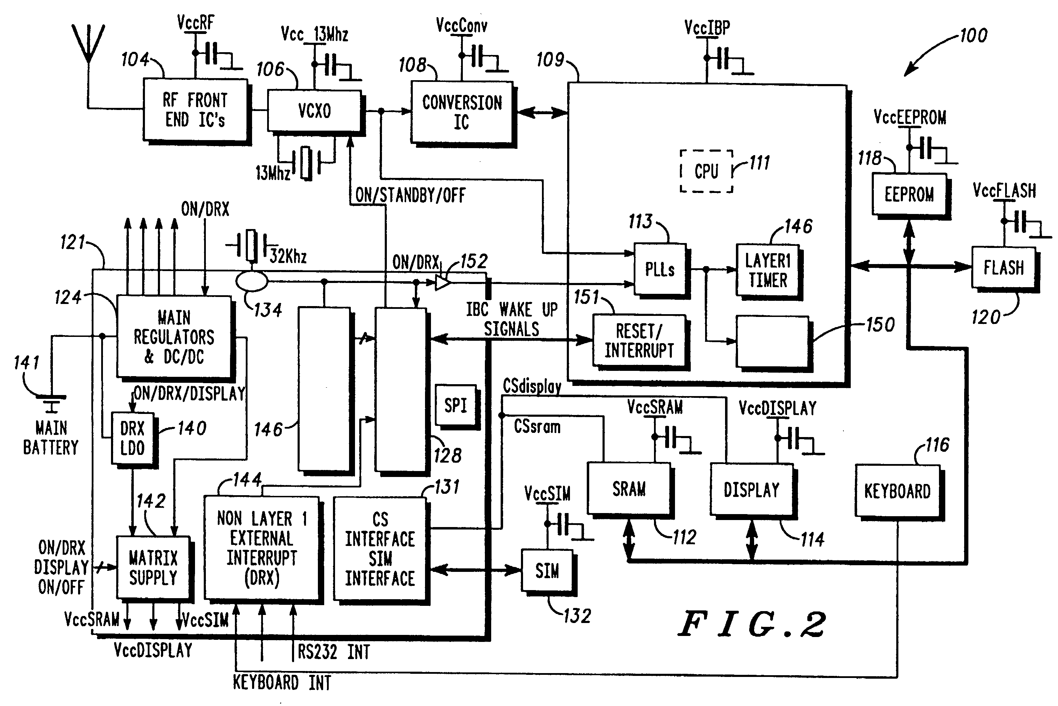

Referring now to FIG. 2, a part 100 of a portable radio communications device in accordance with a preferred embodiment of the present invention comprises a baseband IC 109 having a voltage supply VccIBC and a CPU 111, a power management IC 121, RF front-end ICs 104 having a voltage supply VccRF, a VCO IC 106 having a voltage supply Vcc13MHz, a conversion IC 108 having a voltage supply VccConv, and the baseband IC's peripherals 112-120, each of which have its own voltage supply. The peripherals include a Static Random Access Memory (SRAM) 112 which stores data used by the baseband IC 109 during the active and inactive modes, a display driver 114, a keypad 116, EEPROM 118, and FLASH memory 120. Like components to those of FIG. 1 are referenced by the same reference numeral plus the number 100.

The portable radio communications device in accordance with the present invention is operable in an active mode, that is, when the device is fully operational, e.g. transmitting and receiving a signal, or an inactive mode, for example when the device is in stand-by, e.g. in the DRX mode.

In the preferred embodiment, a 13 MHz crystal oscillator provides a reference signal to the VCO IC 106 and the conversion IC 108. The output of the VCO IC 106 is coupled to PLL 113 of the baseband IC 109. PLL 113 is coupled to a timing circuit 148 which generates, using the signal at the output of the VCO IC 106, a first timing signal or 'fast' clock signal for the CPU 111 and the rest of the communications device during the active mode. The baseband IC 109 also comprises a calibration means 150 coupled to the PLL 113 and a reset/interrupt block 151.

The power management IC 121 comprises voltage regulators and DC/DC converters (block 124) which provide the voltage supplies to the different ICs during the active mode. Block 24 is coupled to the main battery 141. The power management IC 121 also comprises a linear voltage regulator (LDO) 140 which is also coupled to the main battery 141. The linear voltage regulator draws significantly less current than the block 124 and is used to power the communications device during the inactive mode, when the device is in stand-by. Block 124 and LDO 140 are coupled to a matrix supply 142. The matrix supply acts as a switching system, switching between the LDO 140 and the main regulators 124 according to the mode of operation.

The power management IC 121 further comprises a CS/SIM interface 131 for coupling to a SIM monitor 132 which monitors the insertion/removal of a SIM card (not shown) and for coupling to the SRAM 112 and display driver 114 peripherals. The CS/SIM interface ensures that when the baseband IC 109 is 'off' during the inactive mode, the SRAM 112 and display driver 114 peripherals are tri-state.

A power control circuit or power UP/DW sequencer 128, which in the preferred embodiment is implemented as a state machine, generates first and second control signals to initiate the power off or power on, respectively, of a selection of ICs in response to a reset or interrupt signal from the baseband IC 109 or to an external interrupt from interrupt logic 144 or in response to a control signal from control circuit 146. The external interrupt may be due to a keyboard interrupt, a RS232 interrupt (the RS232 being the serial interface connecting the baseband IC 109 with components external to the radio communications device) or the removal of the SIM card or the actuation of the on/off button (not shown). The interrupt logic 144 monitors interrupts during the inactive mode.

The control circuit 146 is coupled to a timing circuit or oscillator 134 and to the power UP/DW sequencer 128. Oscillator 134 provides a second timing signal or 'slow' clock at an output, which is coupled to the power UP/DW sequencer 128 and selectively to the PLL 113 of the baseband IC 109 via a switch 152. In the preferred embodiment, the oscillator 134 is coupled to a 32 KHz crystal oscillator.

In the preferred embodiment, during the inactive mode, the baseband IC 109 is powered off in addition to the RF front end ICs 104, the conversion IC 108 etc. In fact, all those circuits whose functions are not required during the inactive mode are powered off. The only active circuits during the inactive mode are the power management IC 121, the SRAM 112, the FLASH memory 120, the EEPROM 118, the display driver 114 and the SIM monitor 132. All these circuits sink currents less than 2 micro-Amps. This means that the main regulators and DC/DC converters 124 of the power management IC 121 can also be powered off leaving the linear voltage regulator 140 to provide the power supply.

Synchronisation between the fast signal and the slow signal when switching between the inactive mode and active mode is achieved using the calibration means 150 and the control circuit 146 and the information stored in SRAM 112. This will be explained in more detail below.

The calibration means 150 of the baseband IC 109 is arranged to calibrate the frequency of the slow clock signal using the fast clock signal. The calibration means 150 may be implemented in software or hardware.

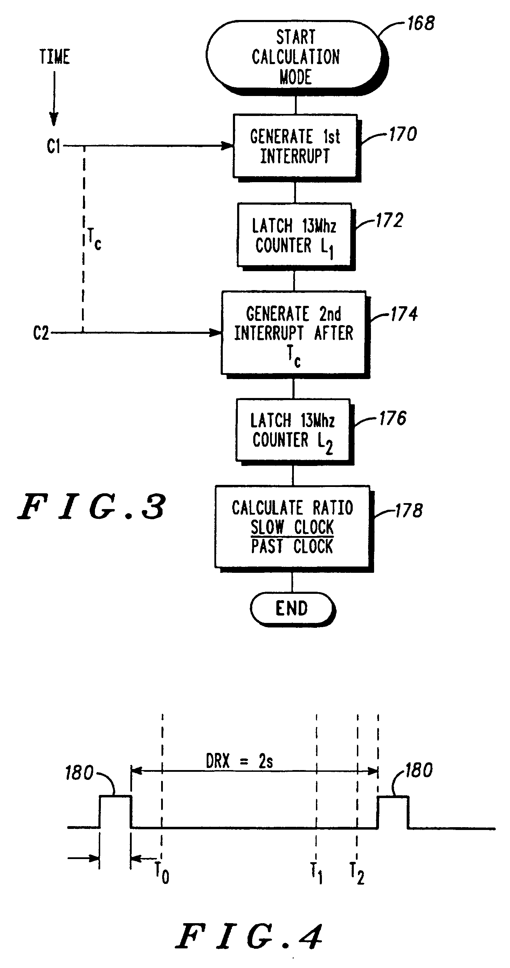

In the preferred embodiment, the calibration process operates as follows, with reference to FIG. 3. In this calibration mode, the baseband IC 109 is powered on and both the fast clock and the slow clock are running. At the start of the calibration mode, block 168, the reset/interrupt block 151, generates a first interrupt at time T= C1, block 170, in response to which the CPU 111 enters an interrupt routine to store the contents of the 13 MHz counter (not shown) of the timing circuit 148, block 172. After a predetermined time Tc, i.e. after a predetermined number of cycles of the slow clock, the reset/interrupt block 151 generates a second interrupt at time T=C2, block 174, in response to which the CPU 111 enters an interrupt routine to store the contents of the 13 MHz counter, block 176. Using the difference between two consecutive stored values of the fast clock and the predetermined number of cycles of the slow clock, the ratio of the slow clock to the fast clock can be determined, block 178.

Thus, once the calibration process has been completed the following relationship between the fast clock and the slow clock is known.

$$N_{32} * T_{32} = N_{13} * T_{13}$$

where

$N_{32}$ is the number of periods of the slow 32 KHz clock
$T_{32}$ is the period of the slow 32 KHz clock
$N_{13}$ is the number of periods of the fast 13 KHz clock
$T_{13}$ is the period of the slow 32 KHz clock

In other words, it is known how many periods of the fast clock correspond to one period of the slow clock.

In the DRX mode, each period of inactivity last up to 2 seconds. In order to get the appropriate accuracy on the slow clock, in the preferred embodiment the predetermined period Tc is 4 seconds so as to have an error of less than one 13 MHz clock period during the period of inactivity.

The calibration mode may be carried out once only on initialisation or may be carried out periodically to update the above relationship so as to compensate for drifts in the oscillators' frequency due to, for example, variations in temperature.

The operation of the portable radio communications device in accordance with the preferred embodiment of the present invention as it switches between active and inactive modes will now be described with reference to FIGs. 2, 4, and 5. The operation will be described with respect to a DRX inactive mode.

As can be seen in FIG. 4, the DRX mode occurs between GSM tasks such as the reception of paging signals 180. The paging signals 180 typically last 20 ms and the DRX mode up to 2 seconds. Other tasks may include reception of short message service signals, SCH synchronisation on surrounding cells.

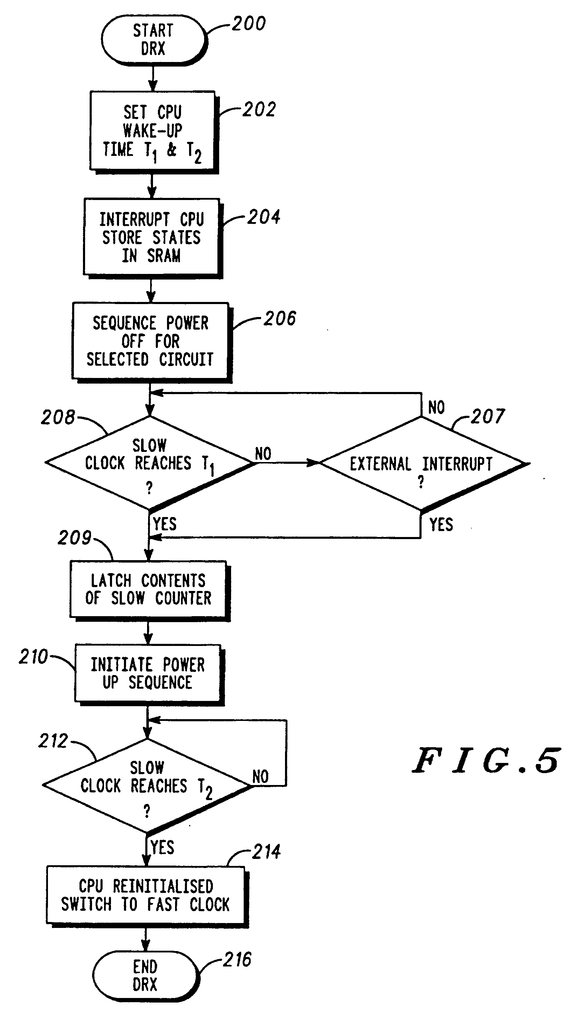

After receipt of a paging signal 180, the device enters the DRX mode, block 200 (of FIG. 5). Using the clock period of the slow 32 KHz clock, the CPU 111 calculates the number of cycles of the slow clock signal before power up (first wake-up time, T1) and the number of cycles of the slow clock signal before re-initialisation of the CPU 111 (second wake-up time, T2), block 202. These values are sent to the control circuit 146 of the power management IC 121 via a serial interface (not shown). The number of cycles of the slow clock signal before the fast clock can be switched off (T0) is also determined and its value is sent from the baseband IC 109 to the power management IC 121 along with T1 and T2. The value depends on the time required by the CPU 111 to store the contents of the counters and to turn off. The CPU 111 also sends a flag to the power management IC 121 indicating the initialisation of the DRX power off sequence. At the rising edge of the next slow 32 KHz clock signal, the power management IC 121 re-initialises a slow 32 KHz clock counter (not shown) in the control circuit 146 and generates an interrupt to the baseband IC 109. The CPU 111 enters an interrupt routine and stores the contents of the 13 MHz fast clock counters in the SRAM 112, block 204. The power UP/DW sequencer 128 powers down the main regulators and DC/DC converters 124, and the VCO IC 106, and the matrix supply 142 couples the linear voltage regulator 140 to provide the voltage supply to the power management IC 121, the SIM monitor 132, the SRAM 112 and the display drivers 114, block 206. The non-required peripherals of the power management IC 121, such as the display (when a display option OFF is selected in the radio communications device), are set in the tri-state mode.

After time TO from re-initialisation of the slow 32 KHz clock counter in the control circuit 146, the slow clock signal takes over from the fast clock signal to clock the device in the inactive mode.

When the slow 32 KHz clock counter (not shown) in the control circuit 146, which counter is counting the cycles of the slow 32 KHz clock signal, reaches the first wake-up time T1 or an external interrupt is generated, block 207, the contents of the slow 32 KHz clock counter are latched, block 209 and the power UP/DW sequencer 128 generates an internal power up sequence, blocks 208, 210. The sequence powers on the main regulators and DC/DC converters 124, the VCO IC 106, and the matrix supply 142 reconnects the voltage supplies of the peripherals 132, 112 and 114 to the main regulators and DC/DC converters 124.

When the slow 32 KHz clock counter reaches the second wake-up time T2, i.e. when the voltage supplies are stabilised for the different ICs and the VCO of the VCO IC 106 has settled, the power UP/DW sequencer 128 generates an interrupt/reset signal to the baseband IC 109, block 214. The baseband IC 109 then starts an internal reset procedure, in terms of a hardware/software reset, followed by a re-initialisation procedure. This procedure is different from a complete reset procedure that could be generated by activation of the ON/OFF button (not shown) or a watchdog timer (not shown). During the re-initialisation procedure, the CPU 111 retrieves the last configuration of the baseband IC 109 before power down from SRAM 112. In addition, from the latched value of the slow 32 KHz clock, T2, the relationship between the slow and fast clock determined during a calibration process and the contents of the SRAM 112, the CPU 111 calculates the contents of the GSM 13 MHz counter such that when the timing circuit 148 switches to the fast 13 MHz clock, the clocks are properly synchronised. The DRX mode is then finished, block 216 and the device operates in the active mode.

When calculating the contents of the GSM 13 MHz counter, the time required by the software to read and load the counters must be taken into account. For this reason, it is preferably to manipulate the contents of the counters during interrupt routines, when the time taken by the software is accurately known.

The slow clock may be disabled during the inactive mode or enabled during both the inactive and the active mode.

As described above, the slow clock is generated from a 32 KHz oscillator. Alternatively, the slow clock may be generated from the real time clock (not shown in FIG. 2 but see FIG. 1) which is typically used to provide information such as the day, hour, minute, second. An advantage of this arrangement is that no additional oscillator is required for the slow clock.

In summary, the present invention provides a portable communications device wherein the components are so arranged such that the functions required during the inactive mode are centralised on preferably one IC, the power management IC, with low power consuming peripherals. Thus, the portable communications device in accordance with the present invention is arranged so that during the inactive mode, for example in the DRX mode, the baseband IC 109 is 'off', in addition to all the other IC's and peripherals whose functions are not required for the inactive mode. Since the baseband IC 109 is not required and only those peripherals and elements with low current drains are required during the inactive mode, the linear voltage regulator 140 can supply all the required voltage supplies and all the main regulators can be turned off which substantially reduces the power consumption of the portable communications device.

The invention has been described with respect to a portable radio communications device. However, it will be appreciated that the principle of the invention can be applied to any battery powered portable electronics device, such as a pager, a portable computer, where the aim is to reduce power consumption during an inactive mode of operation.

It will be appreciated that although the present invention has been described with respect to using two oscillators, a 13 MHz oscillator and a 32 KHz oscillator, the present invention may also be implemented using one oscillator coupled to the first and second timing circuits.

Furthermore, the invention may also be implemented in a system where there are more than two oscillators.

## Claims

1. A portable electronic device operable in an active mode or an inactive mode, the device comprising:

   a first device operating system for performing device operating functions during the active mode but not the inactive mode, the first device operating system including a CPU (111) and a first timing circuit (106, 113, 148) for providing a first timing signal for clocking the portable electronic device, the CPU and first timing circuit being integrated on a first integrated circuit (109); and

a second timing circuit (134) for generating a second timing signal for clocking the portable electronic device during at least the inactive mode, and a power control circuit (146,128) coupled to receive the second timing signal for generating a first control signal for deactivating the first device operating system for the inactive mode and for generating a second control signal for activating the first device operating system for the active mode;

**characterised by** a second device operating system for performing device operating functions during both the active mode and the inactive mode, the second device operating system including said second timing circuit (134), the second timing circuit being integrated on a second integrated circuit (121).

2. The portable electronic device according to claim 1 wherein the second device operating system further comprises:

a voltage regulator (124) coupled to the power control circuit (146, 128) for receiving the first and second control signals, the voltage regulator (124) being enabled in response to the second control signal for providing voltage supplies to the portable electronic device and being disabled in response to the first control signal; a voltage source (140) having a low current drain coupled to the power control circuit (146, 128) for receiving the first and second control signals for providing voltage supplies to the second device operating system in response to the first control signal.

3. The portable electronic device according to claim 2 wherein the second timing circuit (134), the power control circuit(146,128), the voltage regulator (124), and the voltage source (140) are all integrated on the second integrated circuit (121).

4. The portable electronic device according to claim 1, 2 or 3 wherein the second device operating system further comprises interrupt logic (144) coupled to the power control circuit (146,128).

5. The portable electronic device according to claim 1, 2 or 3 wherein the second timing circuit comprises a real-time clock.

6. The portable electronic device according to any preceding claim wherein the first device operating system comprises calibration means (150) for determining a relationship between the first timing signal and the second timing signal, wherein in use the first timing circuit (106, 113, 148) in response to the second control signal uses the determined relationship to generate a first timing signal synchronised with the second timing signal.

7. The portable electronic device according to any preceding claim wherein the portable electronic device comprises a radio communications device.

**Patentansprüche**

1. Tragbare elektronische Vorrichtung, die in einem aktiven Modus oder einem inaktiven Modus betrieben werden kann, wobei die Vorrichtung folgendes umfasst:

ein erstes Betriebssystem der Vorrichtung zum Durchführen von Betriebsfunktionen der Vorrichtung während des aktiven Modus, nicht jedoch des inaktiven Modus, wobei das erste Betriebssystem der Vorrichtung eine CPU (111) und eine erste Timingschaltung (106, 113, 148) zum Bereitstellen eines ersten Timingsignals zum Takten der elektronischen Vorrichtung umfasst, wobei die CPU und die erste Timingschaltung auf einer ersten integrierten Schaltung (109) integriert sind; und eine zweite Timingschaltung (134) zum Erzeugen eines zweiten Timingsignals zum Takten der tragbaren elektronischen Vorrichtung während mindestens des inaktiven Modus und eine Leistungssteuerschaltung (146, 128), die geschaltet ist, um das zweite Timingsignal zum Erzeugen eines ersten Steuersignals zum Deaktivieren des ersten Betriebssystems der Vorrichtung für den inaktiven Modus und zum Erzeugen eines zweiten Steuersignals zum Aktivieren des ersten Betriebssystems der Vorrichtung für den aktiven Modus zu empfangen;

**gekennzeichnet durch** ein zweites Betriebssystem der Vorrichtung zum Durchführen von Betriebsfunktionen der Vorrichtung sowohl während des aktiven Modus als auch während des inaktiven Modus, wobei das zweite Betriebssystem der Vorrichtung die zweite Timingschaltung (134) umfasst, wobei die zweite Timingschaltung auf einer zweiten integrierten Schaltung (121) integriert ist.

2. Tragbare elektronische Vorrichtung gemäß Anspruch 1, bei der das zweite Betriebssystem der Vorrichtung folgendes umfasst:

einen Spannungsregler (124), der mit der Leistungssteuerschaltung (146, 128) zum Empfangen des ersten und zweiten Steuersignals gekoppelt ist, wobei der Spannungsregler (124) in Reaktion auf das zweite Steuersignal zum Bereitstellen von Spannungsversorgungen an die tragbare elektronische Vorrichtung freigegeben und in Reaktion auf das erste Steuersignal gesperrt wird;
eine Spannungsquelle (140) mit einem stromsparenden Drain, die mit der Leistungssteuerschaltung (146, 128) zum Empfangen des ersten und zweiten Steuersignals zum Bereitstellen von Spannungsversorgungen an das zweite Betriebssystem der Vorrichtung in Reaktion auf das erste Steuersignal gekoppelt ist.

3. Tragbare elektronische Vorrichtung gemäß Anspruch 2, bei der die zweite Timingschaltung (134), die Leistungssteuerschaltung (146, 128), der Spannungsregler (124) und die Spannungsquelle (140) alle auf der zweiten integrierten Schaltung (121) integriert sind.

4. Tragbare elektronische Vorrichtung gemäß Anspruch 1, 2 oder 3, bei der das zweite Betriebssystem der Vorrichtung weiterhin die mit der Leistungssteuerschaltung (146, 128) gekoppelte Unterbrechungslogik (144) umfasst.

5. Tragbare elektronische Vorrichtung gemäß Anspruch 1, 2 oder 3, bei der die zweite Timingschaltung eine Echtzeituhr umfasst.

6. Tragbare elektronische Vorrichtung gemäß einem der vorangehenden Ansprüche, bei der das erste Betriebssystem der Vorrichtung eine Eicheinrichtung (150) zum Bestimmen einer Beziehung zwischen dem ersten Timingsignal und dem zweiten Timingsignal umfasst, bei der die erste Timingschaltung (106, 113, 148) unter Betriebsbedingungen in Reaktion auf das zweite Steuersignal die bestimmte Beziehung verwendet, um ein erstes Timingsignal zu erzeugen, das mit dem zweiten Timingsignal synchronisiert ist.

7. Tragbare elektronische Vorrichtung gemäß einem der vorangehenden Ansprüche, bei der die tragbare elektronische Vorrichtung eine Funkkommunikationsvorrichtung umfasst.

## Revendications

1. Dispositif électronique portable pouvant fonctionner dans un mode actif ou un mode inactif, le dispositif comprenant :

un premier système d'exploitation du dispositif, destiné à exécuter des fonctions d'exploitation du dispositif pendant le mode actif, mais pas pendant le mode inactif, le premier système d'exploitation du dispositif comprenant une CPU (111) et un premier circuit de synchronisation (106, 113, 148) pour émettre un premier signal de synchronisation destiné à rythmer le dispositif électronique portable, la CPU et le premier circuit de synchronisation étant intégrés sur un premier circuit intégré (109) ; et

un deuxième circuit de synchronisation (134) pour générer un deuxième signal de synchronisation destiné à rythmer le dispositif électronique portable pendant au moins le mode inactif, et un circuit de commande d'alimentation (146, 128) couplé de manière à recevoir le deuxième signal de synchronisation afin de générer un premier signal de commande destiné à désactiver le premier système d'exploitation du dispositif dans le mode inactif, et de générer un deuxième signal de commande destiné à activer le premier système d'exploitation du dispositif dans le mode actif ;

**caractérisé par** un deuxième système d'exploitation du dispositif, destiné à exécuter des fonctions d'exploitation du dispositif pendant le mode actif et le mode inactif, le deuxième système d'exploitation du dispositif comprenant ledit deuxième circuit de synchronisation (134), et le deuxième circuit de synchronisation étant intégré sur un deuxième circuit intégré (121).

2. Dispositif électronique portable selon la revendication 1, dans lequel le deuxième système d'exploitation du dispositif comprend, en outre :

un régulateur de tension (124) couplé au circuit de commande d'alimentation (146, 128) de manière à recevoir les premier et deuxième signaux de commande, le régulateur de tension (124) étant activé en réponse au deuxième signal de commande, de manière à fournir une alimentation en tension au dispositif électronique portable, et étant désactivé en réponse au premier signal de commande ;
une source de tension (140), ayant une faible consommation de courant, couplée au circuit de commande d'alimentation (146, 128) de manière à recevoir les premier et deuxième signaux de commande, de façon à fournir une alimentation en tension au deuxième système d'exploitation du dispositif en réponse au premier signal de commande.

3. Dispositif électronique portable selon la revendication 2, dans lequel le deuxième circuit de synchronisation (134), le circuit de commande d'alimentation (146, 128), le régulateur de tension (124) et la source de tension (140) sont tous intégrés sur le deuxième circuit intégré (121).

4. Dispositif électronique portable selon la revendication 1, 2 ou 3, dans lequel le deuxième système d'exploitation du dispositif comprend, en outre, une logique d'interruption (144) couplée au circuit de commande d'alimentation (146, 128).

5. Dispositif électronique portable selon la revendication 1, 2 ou 3, dans lequel le deuxième circuit de synchronisation comprend une horloge temps réel.

6. Dispositif électronique portable selon l'une quelconque des revendications précédentes, dans lequel le premier système d'exploitation du dispositif comprend des moyens d'étalonnage (150) destinés à déterminer une relation entre le premier signal de synchronisation et le deuxième signal de synchronisation, où, en utilisation, le premier circuit de synchronisation (106, 113, 148), en réponse au deuxième signal de commande, utilise la relation déterminée pour générer un premier signal de synchronisation, synchronisé avec le deuxième signal de synchronisation.

7. Dispositif électronique portable selon l'une quelconque des revendications précédentes, dans lequel le dispositif électronique portable est un dispositif de radiocommunication.

FIG.1

**FIG.2**

TIME

START
CALCULATION
MODE — 168

C1

$T_c$

GENERATE 1st
INTERRUPT — 170

LATCH 13Mhz
COUNTER $L_1$ — 172

C2

GENERATE 2nd
INTERRUPT AFTER
$T_c$ — 174

LATCH 13Mhz
COUNTER $L_2$ — 176

*F I G . 3*

CALCULATE RATIO
$\dfrac{\text{SLOW CLOCK}}{\text{PAST CLOCK}}$ — 178

END

180

DRX = 2s

180

$T_0$    $T_1$  $T_2$

*F I G . 4*

FIG.5